# DEMANDE DE BREVET EUROPEEN

(11) **EP 4 174 880 A1**
(43) Date de publication de la demande: **03.05.2023**
(21) Numéro de dépôt: 22203661.8
(22) Date de dépôt: 25.10.2022
(51) Int. Cl.: H01B 7/36, G01V 15/00, G06K 19/077, H01B 13/34

(54) **CABLE DE PUISSANCE EQUIPE D'UNE PLURALITE DE DISPOSITIFS ELECTRONIQUES D'IDENTIFICATION PAR RADIOFREQUENCE ET PROCEDE DE FABRICATION ASSOCIE**

(30) Priorité: 28.10.2021 FR 2111470
(71) Demandeur: Nexans, 92400 Courbevoie (FR)
(72) Inventeur: ANDRE, Aymeric, 06160 Antibes (FR); KEROMNES, Laurent, 60200 Compiègne (FR)
(74) Mandataire: Ipsilon

(57) **Abrégé**

Ce câble (10) de puissance comporte au moins un conducteur électrique (12), qui comporte une gaine extérieure (14) et une pluralité de dispositifs électroniques (16) d'identification par radiofréquence. La pluralité de dispositifs électroniques (16) est noyée dans un fil (18) continu disposé sous ou dans la gaine extérieure (14).

## Description

La présente invention se rapporte à un câble de puissance équipé d'une pluralité de dispositifs électroniques d'identification par radiofréquence, ainsi qu'à un procédé de fabrication associé.

L'invention appartient au domaine des câbles électriques de puissance.

Les câbles électriques de puissance sont soumis à des contraintes environnementales telles que le froid, la chaleur, les intempéries ou d'autres agressions extérieures. En outre, dans certaines applications, les câbles sont mobiles en cours de fonctionnement et subissent par conséquent des mouvements de flexion et/ou de torsion et/ou toute autre sollicitation mécanique.

Par ailleurs, il peut être utile de disposer sur ou dans ces câbles des dispositifs électroniques d'identification par radiofréquence ou RFID. De tels dispositifs permettent par exemple d'identifier les câbles, typiquement par leur numéro de série, leur type, leur section, leur tension ou encore leur date de production et peuvent mémoriser et transmettre d'autres informations utiles.

Ces dispositifs électroniques comportent des composants électroniques relativement fragiles, qui sont susceptibles d'être endommagés par les sollicitations mécaniques susmentionnées, au point de ne plus fonctionner correctement.

L'enjeu est donc de protéger suffisamment les dispositifs RFID, tout en permettant la lecture aisée des informations qu'ils transmettent lorsqu'ils sont interrogés par un lecteur ad hoc situé au voisinage des câbles, typiquement à quelques mètres.

La présente invention a pour but de remédier aux inconvénients précités de l'art antérieur.

Dans ce but, la présente invention propose un câble de puissance comportant au moins un conducteur électrique, l'au moins un conducteur électrique comportant une gaine extérieure, l'au moins un conducteur électrique comportant en outre une pluralité de dispositifs électroniques d'identification par radiofréquence, le câble étant remarquable en ce que ladite pluralité de dispositifs électroniques est noyée dans un fil continu disposé sous ou dans la gaine extérieure.

Ainsi, les dispositifs d'identification par radiofréquence ou RFID, disposé à l'intérieur du fil et sous ou dans la gaine extérieure, sont protégés contre les aléas climatiques et les contraintes mécaniques, ce qui permet de prolonger leur durée de vie. En outre, la lecture des données via les dispositifs RFID est facilitée du fait de la présence d'une pluralité de ces dispositifs.

Dans un mode particulier de réalisation, le fil est réalisé en polyamide.

Cette matière permet la réalisation d'un fil à la fois robuste et souple.

Dans un mode particulier de réalisation, les dispositifs électroniques de la pluralité de dispositifs électroniques sont disposés à intervalles réguliers dans le fil.

Cela facilite encore davantage la lecture des données via les dispositifs RFID, quelle que soit la localisation du lecteur par rapport à toute la longueur du câble.

Dans un mode particulier de réalisation, le fil est disposé longitudinalement dans l'au moins un conducteur électrique.

En variante, le fil est disposé hélicoïdalement dans l'au moins un conducteur électrique.

Dans le même but que celui indiqué plus haut, la présente invention propose également un procédé de fabrication d'un câble électrique de puissance à basse tension tel que succinctement décrit ci-dessus, l'au moins un conducteur électrique comportant en outre une couche isolante située sous la gaine extérieure, le procédé étant remarquable en ce qu'il comporte des étapes consistant à :
enrouler sur une bobine le fil dans lequel est noyée la pluralité de dispositifs électroniques ;
installer la bobine sur un dévidoir sur une ligne d'extrusion ;
introduire le fil entre la couche isolante et la gaine extérieure à la même vitesse que la vitesse d'extrusion du câble.

Toujours dans le même but, la présente invention propose également un procédé de fabrication d'un câble électrique de puissance à moyenne tension tel que succinctement décrit ci-dessus, l'au moins un conducteur électrique comportant en outre une couche d'écran métallique située sous la gaine extérieure, le procédé étant remarquable en ce qu'il comporte des étapes consistant à :
enrouler sur une bobine le fil dans lequel est noyée la pluralité de dispositifs électroniques ;
installer la bobine sur un dévidoir sur une ligne d'extrusion ;
introduire le fil entre la couche d'écran métallique et la gaine extérieure à la même vitesse que la vitesse d'extrusion du câble.

Toujours dans le même but, la présente invention propose un procédé de fabrication d'un câble électrique de puissance à moyenne tension tel que succinctement décrit ci-dessus, l'au moins un conducteur électrique comportant en outre une couche d'écran métallique située sous la gaine extérieure, le procédé étant remarquable en ce qu'il comporte des étapes consistant à :
enrouler sur une bobine le fil dans lequel est noyée la pluralité de dispositifs électroniques ;
installer la bobine sur un dévidoir sur une ligne d'extrusion ;
introduire le fil sous la couche d'écran métallique à la même vitesse que la vitesse d'extrusion du câble.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique en perspective d'un câble de puissance conforme à la présente invention, dans un mode particulier de réalisation.
[Fig. 2] est un organigramme illustrant les principales étapes d'un procédé de fabrication d'un câble électrique de puissance à basse tension, dans un mode particulier de réalisation.
[Fig. 3] est organigramme illustrant les principales étapes d'un procédé de fabrication d'un câble électrique de puissance à moyenne tension, dans un mode particulier de réalisation.
[Fig. 4] est un organigramme illustrant les principales étapes d'un procédé de fabrication d'un câble électrique de puissance à moyenne tension, dans un autre mode particulier de réalisation.

### Description de mode(s) de réalisation

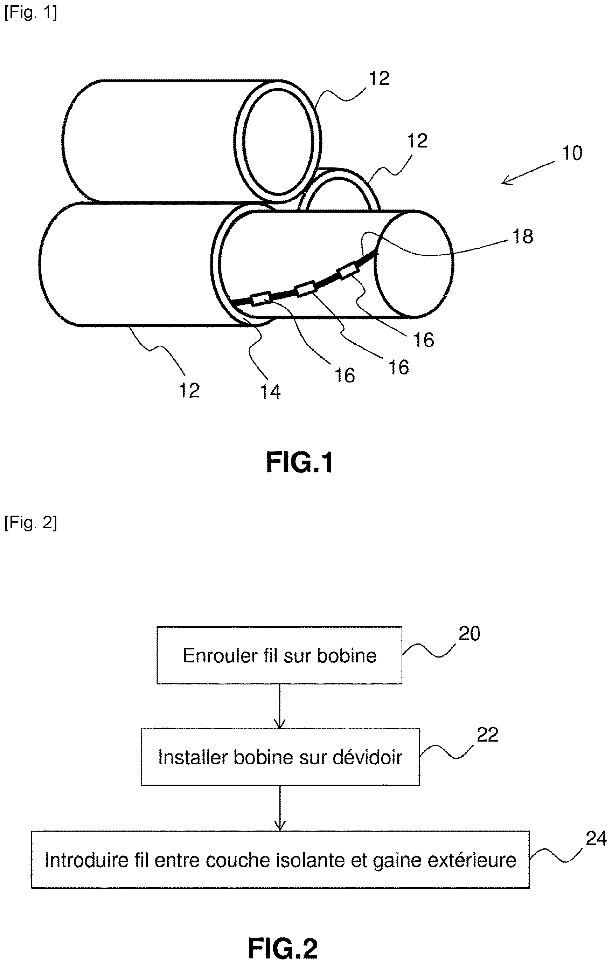

Comme le montre la figure 1, dans laquelle l'échelle des proportions n'est pas respectée pour plus de lisibilité, un câble 10 de puissance conforme à la présente invention comporte au moins un conducteur électrique 12. Dans le mode particulier de réalisation illustré, le câble 10 de puissance comporte trois conducteurs électriques 12, comme c'est généralement le cas pour les câbles à basse tension (LV, en anglais « Low Voltage ») et moyenne tension (MV, en anglais « Médium Voltage »). Pour les câbles LV, il peut y avoir en plus un conducteur neutre. Néanmoins, l'invention s'applique à un câble ayant un nombre quelconque de conducteurs électriques.

Chacun des conducteurs électriques 12 comporte une gaine extérieure 14. Pour simplifier la représentation, pour deux des trois conducteurs électriques 12, seule la gaine extérieure 14 a été représentée.

Chacun des conducteurs électriques 12 comporte en outre une pluralité de dispositifs électroniques 16 d'identification par radiofréquence ou dispositif RFID.

Le dispositif RFID 16 comporte par exemple au moins une puce électronique et au moins une antenne de communication, la puce et l'antenne étant assemblées par exemple par enrobage dans une résine.

Conformément à l'invention, la pluralité de dispositifs RFID 16 est noyée (en anglais « embedded ») dans un fil 18 continu disposé soit sous la gaine extérieure 14, soit dans la gaine extérieure 14.

Le fil 18 peut être réalisé dans une matière isolante, par exemple en polyamide.

Avantageusement mais non nécessairement, la pluralité de dispositifs RFID 16 peuvent être disposés à intervalles réguliers dans le fil 18. Le pas entre deux dispositifs RFID 16 consécutifs est typiquement de x mètres, x étant une valeur supérieure ou égale à 1.

Le fil 18 peut être disposé longitudinalement ou hélicoïdalement dans le conducteur électrique 12.

L'organigramme de la figure 2 illustre les principales étapes d'un procédé de fabrication du câble 10 de puissance décrit ci-dessus, dans un mode de réalisation où le câble 10 est un câble LV et chacun des conducteurs électriques 12 comporte une couche isolante située sous la gaine extérieure 14.

Une première étape 20 du procédé de fabrication consiste à enrouler le fil 18 sur une bobine. Puis une étape 22 consiste à installer la bobine sur un dévidoir sur une ligne d'extrusion. Ensuite, une phase d'extrusion de la gaine extérieure 14 a lieu, lors de laquelle, au cours d'une étape 24, le fil 18 est introduit entre la couche isolante et la gaine extérieure 14. Grâce au dévidoir, l'introduction du fil 18 est effectuée à la même vitesse que l'extrusion du câble 10.

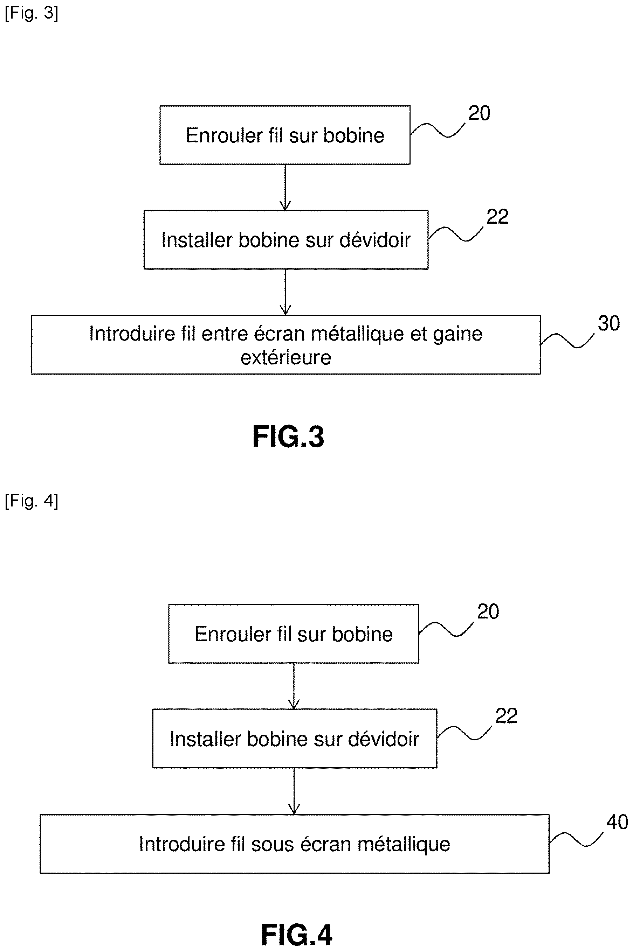

L'organigramme de la figure 3 illustre les principales étapes d'un procédé de fabrication du câble 10 de puissance décrit ci-dessus, dans un mode de réalisation où le câble 10 est un câble MV et chacun des conducteurs électriques 12 comporte une couche d'écran métallique située sous la gaine extérieure 14. Cette couche d'écran métallique est par exemple une feuille d'aluminium.

Dans ce mode de réalisation, les étapes d'enroulement 20 et d'installation 22 sont les mêmes que dans le mode de réalisation de la figure 2. Ensuite, lors de la phase d'extrusion de la gaine extérieure 14, au cours d'une étape 30, le fil 18 est cette fois introduit entre la couche d'écran métallique et la gaine extérieure 14, à la même vitesse que l'extrusion du câble 10.

L'organigramme de la figure 4 illustre les principales étapes d'un procédé de fabrication du câble 10 de puissance décrit ci-dessus, dans une variante de réalisation où le câble 10 est un câble MV identique au précédent.

Dans cette variante, les étapes d'enroulement 20 et d'installation 22 sont les mêmes que dans les modes de réalisation des figures 2 et 3. Ensuite, lors de la phase d'extrusion de la gaine extérieure 14, au cours d'une étape 40, le fil 18 est cette fois introduit sous la couche d'écran métallique, à la même vitesse que l'extrusion du câble 10. Cette variante offre une protection améliorée des dispositifs RFID 16 et réduit le risque de propagation d'eau le long du fil 18, étant donné que la couche d'écran métallique fait obstacle à la pénétration de l'humidité.

Dans d'autres variantes, il peut être envisagé d'insérer le fil 18 entre deux couches successives formant la gaine extérieure 14, entre les fils d'écran, ou encore à l'intérieur de tubes placés dans les interstices du câble 10, c'est-à-dire entre les conducteurs 12.

L'invention s'applique de façon particulièrement avantageuse aux câbles de puissance utilisés dans les réseaux de distribution d'énergie (en anglais « distribution grids »).

## Revendications

1. Câble (10) de puissance comportant au moins un conducteur électrique (12), ledit au moins un conducteur électrique (12) comportant une gaine extérieure (14), ledit au moins un conducteur électrique (12) comportant en outre une pluralité de dispositifs électroniques (16) d'identification par radiofréquence, ledit câble (10) étant **caractérisé en ce que** ladite pluralité de dispositifs électroniques (16) est noyée dans un fil (18) continu disposé sous ou dans ladite gaine extérieure (14).

2. Câble (10) selon la revendication 1, **caractérisé en ce que** ledit fil (18) est réalisé en polyamide.

3. Câble (10) selon la revendication 1 ou 2, **caractérisé en ce que** les dispositifs électroniques (16) de ladite pluralité de dispositifs électroniques (16) sont disposés à intervalles réguliers dans ledit fil (18).

4. Câble (10) selon la revendication 1, 2 ou 3, **caractérisé en ce que** ledit fil (18) est disposé longitudinalement dans ledit au moins un conducteur électrique (12).

5. Câble (10) selon la revendication 1, 2 ou 3, **caractérisé en ce que** ledit fil (18) est disposé hélicoïdalement dans ledit au moins un conducteur électrique (12).

6. Procédé de fabrication d'un câble électrique de puissance à basse tension selon l'une quelconque des revendications précédentes, ledit au moins un conducteur électrique (12) comportant en outre une couche isolante située sous ladite gaine extérieure (14), ledit procédé étant **caractérisé en ce qu'**il comporte des étapes consistant à :
enrouler sur une bobine ledit fil (18) dans lequel est noyée ladite pluralité de dispositifs électroniques (16) ;
installer ladite bobine sur un dévidoir sur une ligne d'extrusion ;
introduire ledit fil (18) entre ladite couche isolante et ladite gaine extérieure (14) à la même vitesse que la vitesse d'extrusion dudit câble.

7. Procédé de fabrication d'un câble électrique de puissance à moyenne tension selon l'une quelconque des revendications 1 à 5, ledit au moins un conducteur électrique (12) comportant en outre une couche d'écran métallique située sous ladite gaine extérieure (14), ledit procédé étant **caractérisé en ce qu'**il comporte des étapes consistant à :
enrouler sur une bobine ledit fil (18) dans lequel est noyée ladite pluralité de dispositifs électroniques (16) ;
installer ladite bobine sur un dévidoir sur une ligne d'extrusion ;
introduire ledit fil (18) entre ladite couche d'écran métallique et ladite gaine extérieure (14) à la même vitesse que la vitesse d'extrusion dudit câble.

8. Procédé de fabrication d'un câble électrique de puissance à moyenne tension selon l'une quelconque des revendications 1 à 5, ledit au moins un conducteur électrique (12) comportant en outre une couche d'écran métallique située sous ladite gaine extérieure (14), ledit procédé étant **caractérisé en ce qu'**il comporte des étapes consistant à :
enrouler sur une bobine ledit fil (18) dans lequel est noyée ladite pluralité de dispositifs électroniques (16) ;
installer ladite bobine sur un dévidoir sur une ligne d'extrusion ;
introduire ledit fil (18) sous ladite couche d'écran métallique à la même vitesse que la vitesse d'extrusion dudit câble.
